# EUROPEAN PATENT APPLICATION

(11) **EP 2 923 789 A1**
(43) Date of publication of application: **30.09.2015**
(21) Application number: 14162143.3
(22) Date of filing: 27.03.2014
(51) Int. Cl.: B23C 5/22, B27G 13/04, B27G 13/10

(54) **Milling Tool**

(71) Applicant: Centerinox S.r.l., Grottammare (IT)
(72) Inventor: CIARROCCHI, Antonio, 63064 CUPRA MARITTIMA (IT)
(74) Representative: Bosman, Cesare

(57) **Abstract**

A milling tool (1) consists of a central body (2) in which at least one radial housing seat (3) is provided, at least a cutting knife (4) housed in the housing seat (3) and a locking assembly (5) also housed in the housing seat (3) and adapted to lock the knife (4). The milling tool comprises at least two lateral positioning pins (12) adapted to engage respective housings (13) formed in the cutting knife (4) and at least one base positioning pin adapted to engage a respective housing (17) formed in the base (4b) of the cutting knife (4). The two lateral positioning pins (12) extend or from a locking assembly (5) or from a supporting wall (6) of the housing seat (3), while the base positioning pin (16) extends from a bottom portion of the housing seat (3).

## Description

The present invention relates to a milling tool for machining wood, synthetic resin materials and soft metal materials.

The tool comprises a central body of substantially cylindrical shape, to which two or more cutting knives are radially associated and locking devices to lock said cutting knives onto the central body.

One of the problems usually encountered in the use of milling tools relates to the positioning of the knives in the central body. Indeed, said positioning must be simple, quick and above all safe, in the sense that during operation of the tool the centrifugal force to which the knives are subjected must not in any way change the position thereof.

Purpose of the present invention is a milling tool whose technical characteristics are so as to ensure a quick and above all safe, positioning of the knives.

Subject of the present invention is a milling tool whose essential characteristics are described in claim 1, and whose preferred and/or auxiliary characteristics are set forth in claims 2-6.

The following examples are for illustrative and not limitative purposes, for a better understanding of the invention with the aid of the figures of the attached drawing, wherein:
Figure 1 is a first exploded view of the milling tool according to the present invention;
Figure 2 is a second exploded view of the milling tool of Figure 1; and
Figure 3 is an exploded view of a further embodiment of the milling tool according to the present invention.

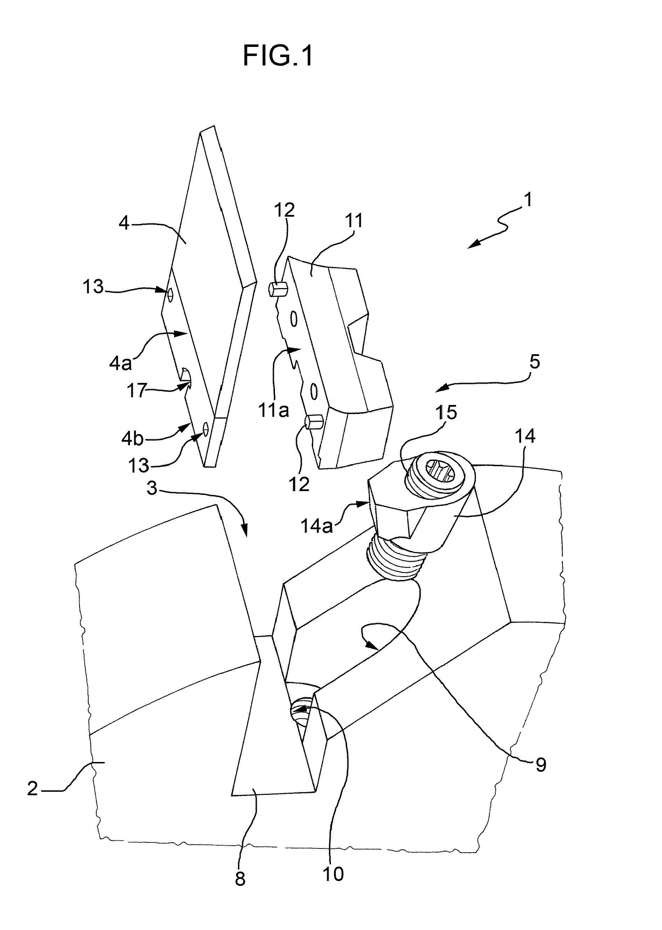

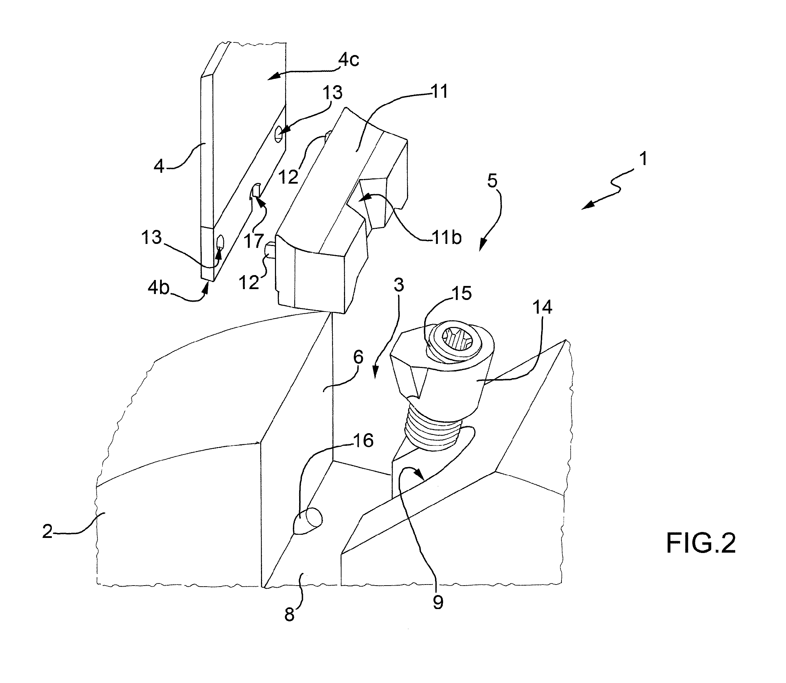

In Figures 1 and 2 with 1 is indicated as a whole a preferred embodiment of the milling tool according to the present invention.

The milling tool 1 comprises a central body 2 in which a radial housing seat 3 is formed for housing a cutting knife 4 and a locking assembly 5.

In particular, each of the radial housings 3 is defined by a supporting wall 6 on which a rear surface 4a of the knife 4 rests, and by a bottom wall 8 on which a lower edge 4b of the knife 4 rests. The supporting wall 6 and the bottom wall 8 are arranged perpendicular to each other.

Furthermore, in each of the radial housing 3 a groove 9 is formed which faces on the supporting wall 6 and in correspondence of which in the bottom wall 8 a threaded hole 10 is formed.

The locking assembly 5 comprises a block 11 having an opposing surface 11a in use arranged in abutment against a front surface 4c of the knife 4, and an oblique surface 11b arranged on the opposite side of the surface 11a. From the opposing surface 11a a pair of positioning pins 12 extend which in use engage two respective through holes 13 formed in the knife 4.

The locking assembly 5 also comprises a nut screw 14 housed in use inside the groove 9 and having an oblique surface 14a in use arranged against the oblique surface 11b of the block 11. The nut screw 14 is coupled with a screw 15 which, with a first portion, engages the nut screw 14 and, with a second portion, engages the threaded hole 10.

Each of the radial housing seats 3 further comprises a positioning pin 16, which extends from the junction between the supporting wall 6 and the bottom wall 8 and at about 45° with respect to both ones. In use, the positioning pin 16 engages a recess 17 formed in the lower edge 4b of the knife 4.

As illustrated in the attached figures, the knife 4 is composed by an upper part 18 made of a material suitable for cutting operations such as Widia (cemented carbide), and a lower part 19 made of a softer material, such as C45, and in which the two through holes 12 and the recess 17 are formed. The upper part 18 and lower part 19 are brazed together.

In use, the knife 4 is positioned inside the radial housing seat 3, by engaging the recess 17 by the positioning pin 16 and constraining, therefore, the knife into a correct lateral position thereof. Subsequently, the block 11 is inserted into the radial housing seat 3 and bring it in abutment against the knife 4 by placing each of the two pins 12 in a respective through hole 13. In this way, it is assured even a further constraint of the knife 4 which guarantees a proper radial positioning thereof. Finally, the nut screw 14 is inserted in the groove 9 wherein is fixed by the action of the screw 15. The nut screw 14 is arranged with its oblique surface 14a in contact with the oblique surface 11b of the block 11. The coupling of the two oblique surfaces 14a and 11b ensures the locking of the knife 4 against the supporting wall 6, while the presence of the three pins 12 and 16 guarantees the correct positioning thereof. Said positioning is particularly stable, since it cannot be disrupted by the centrifugal force that acts necessarily on the knife during the normal milling action.

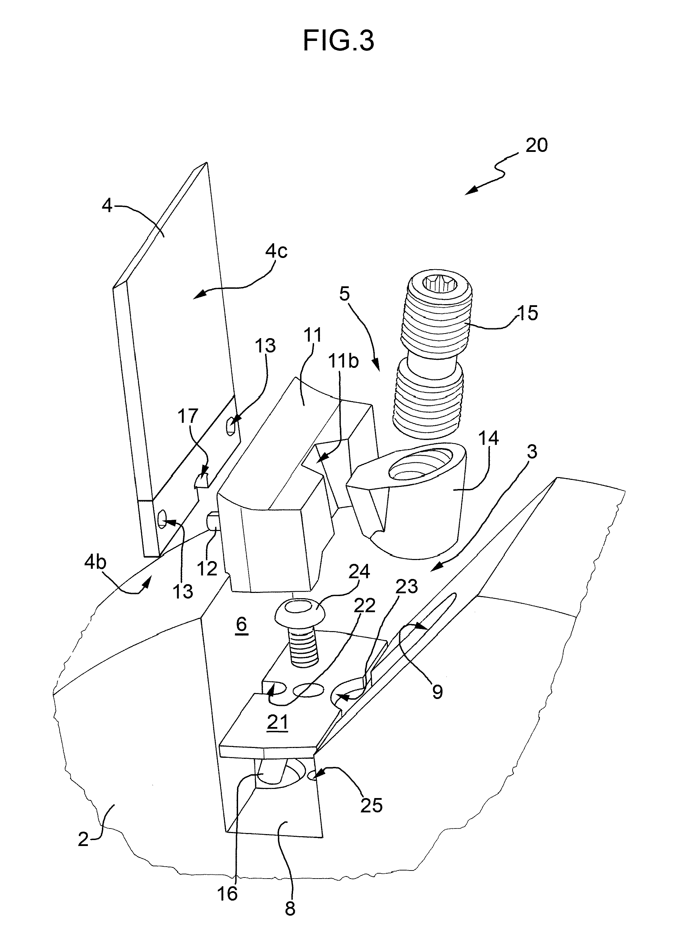

In figure 3 is shown a milling tool 20 according to a second embodiment. The parts of the milling tool 20 equal to the parts of the milling tool 1 are indicated with the same numbering and will not be described again.

The milling tool 20 substantially differs from the milling tool 1 for the presence of a recovery plate 21 arranged in contact with the bottom wall 8 and whereon the block 11 rests. In particular, the recovery plate 21 has a first groove 22 which is engaged by the positioning pin 16, and a second groove 23 which is engaged by the screw 15. The recovery plate 21 is fixed to the bottom wall 8 by a screw 24, which engages a hole formed in the recovery plate 21 and a threaded hole 25 formed in the same bottom wall 8. The recovery plate 21 has the purpose of recovering the cutting diameter following the sharpening or re-profiling operation. In fact, said operations are performed by removing material from the face 4c of the knife so as to restore the cutting edge of the cutter while maintaining the cutting angle unchanged. This operation, however, involves a reduction in the height of the knife, with a consequent proportional reduction in the cutting diameter of the tool.

As is apparent from the above description, the milling tool of the present invention allows to ensure a correct and comfortable positioning of the knife on the central body thanks to the coupling of three pins with the respective seats identified by the housings formed in the knife itself. For this purpose, it should be specified that the two pins 12 may be equally effective even if they extend from the support wall 6 rather than from the opposing surface 11a of the block 11, or if they extend from a specialized plate arranged between the supporting wall 6 and the knife 4.

Furthermore, the tool of the present invention offers the advantage of being able to recover the cutting diameter by inserting a recovery plate 21 of the thickness useful to recover said cutting diameter.

## Claims

1. A milling tool (1) comprising a central body (2) in which at least one radial housing seat (3) is provided, at least a cutting knife (4) housed in said housing seat (3) and a locking assembly (5) also housed in said housing seat (3) and adapted to lock said knife (4); said milling tool being **characterized by** comprising at least two lateral positioning pins (12) adapted to engage respective lateral locking seats (13) formed in the cutting knife (4) and at least one base positioning pin (16) adapted to engage a further respective base locking seat (17) formed at a lower edge (4b) of the cutting knife (4); the two lateral positioning pins (12) extending from said locking assembly (5) or by a supporting wall (6) of the housing seat (3) or by a specialized plate arranged between said supporting wall (6) and said knife (4); the base positioning pin (16) extending in proximity to or from a bottom wall (8) of said housing seat (3).

2. The milling tool according to claim 1, **characterized in that** said blade comprises an upper part (18) made of a material suitable for cutting operations and a lower part (19) made of softer material and in which two lateral locking seats (13) and the base locking seat (17) are formed.

3. The milling tool according to claim 1 or 2, **characterized in that** said locking assembly (5) comprises a block (11) having an opposing surface (11a) adapted to be arranged in abutment against a surface (4c) of the knife (4) and from which the two lateral positioning pins (12) extend.

4. The milling tool according to claim 3, **characterized in that** the locking assembly (5) comprises a nut screw (14) housed in the housing seat (3) and having an oblique surface (14a) arranged against an oblique surface (11b) of the block (11) arranged on the opposite side of the opposing surface (11a); the nut screw (14) being coupled with a screw (15), which, with a first portion engages the nut screw (14) and, with a second portion, engages a threaded hole (10) formed in the bottom wall (8).

5. The milling tool according to claim 3 or 4, **characterized by** comprising a recovery plate (21) arranged in contact with the bottom wall (8) and on which the block (11) rests.

6. The milling tool according to one of the preceding claims, **characterized in that** the base positioning pin (16) extends in said radial housing seat (3) from the conjunction between the supporting wall (6) and the bottom wall (8).
